# EUROPEAN PATENT SPECIFICATION

(11) **EP 1 724 297 B1**
(45) Date of publication and mention of the grant of the patent: **07.07.2010**
(21) Application number: 06112241.2
(22) Date of filing: 05.04.2006
(51) Int. Cl.: C08J 5/04, B32B 5/00

(54) **Wooden blockboard**
Stabverleimte Massivholzplatte
Panneaux lattés en bois

(30) Priority: 14.04.2005 IT SV20050016
(43) Date of publication of application: 22.11.2006
(73) Proprietor: ILPA Industria Legno Pasotti Srl, 25075 Nave (BS) (IT); ULMA C y E, S. COOP., 20560 Onati (Gipuzkoa) (ES)
(72) Inventor: Pasotti, Rubens, I-25075 Nave (Brescia) (IT)
(74) Representative: Karaghiosoff, Giorgio Alessandro

(56) References cited:
- EP-A- 1 471 104

## Description

The invention relates to a blockboard that is a board composed of an assembly to adjacent wood strips, or the like.

These blockboards that are generally known as "yellow boards" are composed of at least one base layer made of adjacent wood strips that are glued together one near the other that is along walls perpendicular or transversal to the plane along which at least a face of said board extends, at least one of the faces of the base layer and/or preferably both faces of the base layer being covered by a finish and/or protective resin layer composed of a glue, particularly melaminic or phenolic resin, or the like.

The document EP 1471104 describes an adhesive composition for use in the manifacture of wood-based boards. The adhesive composition contains resin, filler, solvent and foaming agent.

The adhesive composition is formed by mixing the resin, filler, foaming agent an solvent together to produce an emulsion, e.g. a water emulsion. This composition can have a very good foamability and allows a good control of foamability. Moreover the adhesive has a good and fast spreadability on the surface to be glued. The adhesive composition is applicable for use in the manufacture of various wood-based boards in different condition.

In the preferred embodiment said blockboards are composed of two, three or more layers each one made of an assembly of adjacent strips glued together, strips of each layer being arranged with a different orientation, particularly transversal or orthogonal to the orientation of strips of adjacent layers and each strip layer being glued to adjacent layer or layers. In this case the board is said crossed strip multilayered, blockboard.

Said boards can be used in various fields, such as for example in building field for making walls containing concrete castings or the like, that is such as formwork wall modular members.

When using said boards it has been noted that due to thermal stresses, mechanical stresses and humidity, namely due to the exposure to thermal variations and/or to humidity and/or variations of sun radiation conditions or the like that is light-dark variations, in the long run leaks or cracks in finish and/or protective melaminic resin layers occur in spite of the fact that board faces are covered by melaminic resin layers. These cracks are on the surface of board faces and allow humidity to penetrate to layers made of wood strips that become impregnated with humidity. That causes the beginning of rottenness or decay processes of wood material quickly making the board useless.

Due to this drawback said boards are less desiderable than boards of other type that have finish and protective layers of other material while based on core or an inner layer made of wood material. However these alternative boards are expensive both for the type of material used for protective layers, for example polyolefin material plates, and for greater manufacturing costs, as well as for the type of wood that is used that is the so called multilayered veneer type.

Therefore the aim of the invention is to improve a board of the type disclosed hereinbefore such that the board has improved resistance to thermal, mechanical and environmental stresses by means of simple and not expensive expedients avoiding cracks or leaks in the protective layer.

The invention is based on the fact of recognizing that due to tensile stress parallely to board surfaces due to mechanical and/or thermal and/or environmental stresses, finish and protective melaminic resin layers are subjected to tearings. Tearing areas correspond to areas where wood material of strips have in turn leaks, cracks, grain or the like that are by nature present in wood material of strips and they occur not only between areas where individual strips contact but also inside the individual strip.

Moreover the invention is based on the fact that leaks or the like that are naturally present in wood material layer or layers that is in layers composed of the assembly of adjacent strips have a random orientation and path as well as shape with reference to possible directions in the plane made by board faces and have also lengths that are different one with respect to the other and widths that are different one with respect to the other according to random arrangements.

Considering said random arrangement of orientation and/or path of leaks, cracks or of natural grain of strip wood material the invention provides a finish or protective layer of individual layer or strip multilayer by strengthening the finish and protective malaminic or phenolic resin layer with a layer composed of a fibre interlacement, such as a fabric, non woven fabric, mat or the like impregnated with said melaminic glue.

According to a preferred embodiment the finish and protective layer has a strengthening composed of a fibre interlacement with random path and/or orientation, particularly a non woven fabric.

Surprisingly it has been found that in this case, the making of cracks, leaks or tearings in finish or protective layers is widely eliminated.

Using a non woven fabric as strengthening a better result is achieved. To a large extent that seems to be due to the fact that fibres in non woven fabric are in turn arranged with random orientations and/or paths.

Therefore the structure of the board according to the invention and solving the above problem comprises:
at least a base layer composed of at least a layer of adjacent strips glued together one near the other;
at least a finish layer composed of a non woven fabric impregnated with melaminic resin.

Advantageously the crossed fibre layer and particularly made of non woven fabric is composed of a mattress made of at least one or more layers composed of thermoplastic material fibres.

When more than one strengthening layers are provided, that is made of fibres, they can be connected one with the other by heat sealing and/or mechanical interlacement, mechanical or water needle-punching and they can have a surface treatment.

The non woven fabric layer can be obtained by any known technique intended to obtain a fibre interlacement with random orientation and path.

The layer of crossed fibres and particularly non woven one considered both as a single one and as made of various layers coupled together has a total weight, that is a basis weight which is quite low.

Preferably such basis weight is 10 to 500 grams per square metre, especially some dozens to about 200 grams per square metre preferably 50 to 150 grams per square metre.

Particularly the invention provides the use of polymer and/or thermoplastic copolymer fibres.

Particularly a polyester, such as for example polyethylene glycol ether terephthalate.

According to a further feature, the layer of crossed fibres and particularly made of non woven fabric comprises low molecular weight binders in fibre interlacement.

The application of the finish and protective layer comprising the strengthening of crossed fibres and particularly the non woven fabric and of melaminic or phenolic resin impregnating it, can occur by any known process.

For example in a calender and in heat condition a fibre mattress, particularly of non woven fabric, can be impregnated with melaminic or phenolic resin and said fibre mattress impregnated with melaminic or phenolic resin can be applied to the face or faces of the base layer of the board composed of adjacent wood strips in a following station by means of hot pressure.

The hot pressure for applying the finish and protective layer to the base layer occurs for example in a hot-plate press.

According to an alternative, the application of finish and protective layer or layers can occur in a single common step where the non woven fabric layer and the base layer composed of adjacent wood strips glued together are contemporaneously applied one with the other, which layers have been previously both impregnated with melaminic or phenolic resin on outer surfaces.

According to an improvement, the fibre layer particularly made of non woven fabric before its application to the base layer composed of adjacent wood strips glued together or after being impregnated with melaminic or phenolic resin and/or the application of said non-woven layer impregnated with melaminic resin to the base layer composed of wood strips, can be subjected to a surface treatment intended to reduce the surface roughness.

Therefore the surface treatment provides a better aesthetical appearance and due to the fact of being smooth it provides also a better separation of concrete during dismantling and an easier cleanability, that is the removal of concrete waste that remains adherent to the board after dismantling.

Advantageously such treatment provides to spray a low molecular weight polymer dispersed in a suitable dispersant on the surface of the finish and protective layer which surface is intended to be the free face of the board.

A low molecular weight polymer that is particularly suitable for this aim is for example the so called latex.

Due to the above expedients according to the present invention there can be provided a blockboard board whose finish and protective layer has a considerable resistance to splits,cracks or leaks due to both environmental and/or thermic action and to mechanical stress.

A considerable advantage is the fact that the process manufacturing the board is substantially the conventional process where the melaminic resin composing the finish and protective layer of the base layer composed of one or more layers of adjacent wood strips glued together is applied in calender on the in sight surfaces that is on the two opposite faces of the base layer of wood strips.

In the following an embodiment for manufacturing a board according to the present invention will be disclosed.

A plate composed of three layers wherein each layer is composed of adjacent wood strips glued together and wherein said three layers are glued together, strips of one layer being crossed with respect to strips of the adjacent layer is manufactured according to known manufacturing techniques and it is the base layer of the board.

On in sight outer faces of the base layer composed of three layers of wood strips there is applied a melaminic resin in a calender and in hot conditions (a pair of counter-rotating rollers).

A finish and protective layer is made by impregnating a non woven fabric composed of thermoplastic fibres particularly of polyethylene glycol ether terephthalate and comprising low molecular weight binders with a melaminic resin.

Said non woven layer impregnated with melaminic resin is further subjected to a surface treatment consisting in spraying it with latex.

Then the blockbaord base layer impregnated on the surface with melaminic resin and the non woven layer impregnated with melaminic resin in combination are subjected to a pressure in a hot-plate press.

Preferably the exerted pressure is such to press at least partially wood strips. Particularly the pressure exerted in the present test is about 7 kg per square centimetre.

The board thus obtained has a smooth surface without roughness and continuous surface that is without leaks, cracks or the like.

The board thus obtained has been subjected to alternating cycles consisting in water boiling and drying to a temperature about of 70-80° for various days.

At the end of the treatment no leaks, cracks or unevenness of the finish and protective layer composed of the non woven fabric layer impregnated with melaminic resin have been found.

The surface appearance of the board is smooth.

As already disclosed above it is possible for the blockboard to have a base layer composed also of only one layer or only two layers or even more than three layers each one composed of adjacent wood strips glued together and manufacturing according to known techniques.

For manufacturing the board and so for the application of melaminic resin and the non woven fabric layer to outer surfaces of the base layer composed only of wood layers it is possible to use even any of above variants.

The test has been repeated using a phenolic resin as the resin and the same above results have been found.

## Claims

1. Blockboard that is a board composed of an assembly to adjacent wood strips, or the like, which blockboard is composed of at least one base layer made of adjacent wood strips that are glued together one near the other that is along walls perpendicular or transversal to the plane along which at least a face of said board extends, at least one of the faces of the base layer and/or preferably both faces of the base layer being covered by a finish and/or protective resin layer composed of a glue, particularly melaminic or phenolic resin, or the like, **characterized in that** the finish or protective layer of the single or multilayered base layer comprises a strengthening of the melaminic resin layer with a layer of crossed fibres.

2. Board according to claim 1, **characterized in that** the strengthening of the finish and protective layer is composed of a non woven fabric impregnated with said melaminic resin.

3. Board according to claim 1, **characterized in that** the non woven fabric is composed of crossed fibres having random orientations and/or paths.

4. Board according to one or more of the preceding claims, therefore **characterized in that**
at least a base layer composed of at least one or more layers each one in turn composed of adjacent wood strips glued together one near the other;
at least a finish layer composed of a fibre interlacement, particularly a non woven fabric impregnated with melaminic or phenolic resin and anchored to the base layer by means of said resin.

5. Board according to one or more of the preceding claims, **characterized in that** the non woven fabric is composed of a mattress made of at least one or more layers of crossed fibres, particularly non woven fabric composed of thermoplastic material fibres.

6. Board according to one or more of the preceding claims, **characterized in that** the fibre layer, particularly made of non woven fabric has various fibre layers, particularly non woven fabric connected one with the other by heat sealing and/or mechanical interlacement, mechanical or water needle-punching.

7. Board according to one or more of the preceding claims, **characterized in that** the non woven fabric layer has a total weight, that is a basis weight which is quite low.

8. Board according to one or more of the preceding claims, **characterized in that** the non woven fabric layer has a total weight, that is a basis weight of 10 to 500 grams per square metre, especially some dozens to about 200 grams per square metre preferably 50 to 150 grams per square metre.

9. Board according to one or more of the preceding claims, **characterized in that** thermoplastic materials used for the non woven fabric layer are composed of fibres of a polyester, such as for example polyethylene glycol ether terephthalate.

10. Board according to one or more of the preceding claims, **characterized in that** the non woven fabric layer comprises low molecular weight binders in fibre interlacement.

11. Board according to one or more of the preceding claims, **characterized in that** the non woven fabric layer is subjected to a chemical surface treatment.

12. Board according to claim 11, **characterized in that** the non woven fabric layer is subjected to the spraying of a low molecular weight polymer dissolved in a suitable dissolvent on the surface intended to be the free face of the board.

13. Board according to claim 12, **characterized in that** a low molecular weight polymer that is particularly suitable for this aim is for example the so called latex.

## Patentansprüche

1. Stabplatte, d.h. eine aus einem Zusammenbau von benachbarten Holzleisten oder dergleichen gebildete Platte, wobei die Stabplatte aus zumindest einer Grundschicht gebildet ist, die aus benachbarten Holzleisten hergestellt ist, welche eine in der Nähe der nächsten zusammengeleimt sind, d.h. Wände entlang, die senkrecht oder schräg zu der Ebene verlaufen, entlang welcher zumindest eine Seitenfläche der Platte verläuft, wobei zumindest eine der Seitenflächen der Grundschicht und/oder vorzugsweise beide Seitenflächen der Grundfläche mit einer Finish- und/oder Harzschutzschicht beschichtet sind, die aus Leim gebildet ist, insbesondere Melamin- oder Phenolharz oder dergleichen, **dadurch gekennzeichnet, dass** die Finish- oder Schutzschicht der ein- oder mehrschichtigen Grundschicht eine Verstärkung der Melaminharzschicht mit einer Schicht von Querfasern umfasst.

2. Platte nach Anspruch 1, **dadurch gekennzeichnet, dass** die Verstärkung der Finish- oder Schutzschicht aus Vliesstoff gebildet ist, der mit dem Melaminharz imprägniert ist.

3. Platte nach Anspruch 1, **dadurch gekennzeichnet, dass** der Vliesstoff aus Querfasern mit zufälligen Ausrichtungen und/oder Verlaufswegen gebildet ist.

4. Platte nach einem oder mehreren der vorhergehenden Ansprüche, mithin **dadurch gekennzeichnet** durch
zumindest eine Grundschicht, die aus zumindest einer oder mehreren Schichten gebildet ist, welche jede wiederum aus benachbarten Holzleisten gebildet sind, die eine in der Nähe der nächsten zusammengeleimt sind;
zumindest eine Finish-Schicht, die aus einer Faserverflechtung gebildet ist, insbesondere einem Vliesstoff, der mit Melamin- oder Phenolharz imprägniert und mithilfe des Harzes an der Basisschicht verankert ist.

5. Platte nach einem oder mehreren der vorhergehenden Ansprüche, **dadurch gekennzeichnet, dass** der Vliesstoff aus einer Matte gebildet ist, die aus zumindest einer oder mehreren Schichten von Querfasern gebildet ist, insbesondere Vliesstoff, der aus Fasern aus thermoplastischem Material gebildet ist.

6. Platte nach einem oder mehreren der vorhergehenden Ansprüche, **dadurch gekennzeichnet, dass** die Faserschicht, die insbesondere aus Vliesstoff hergestellt ist, mehrere Faserschichten aufweist, insbesondere Vliesstoff, die durch Heißsiegeln und oder mechanische Verflechtung, mechanische oder Wasservernadelung miteinander verbunden sind.

7. Platte nach einem oder mehreren der vorhergehenden Ansprüche, **dadurch gekennzeichnet, dass** die Vliesstoffschicht ein Gesamtgewicht aufweist, das ein Flächengewicht ist, welches ziemlich niedrig ist.

8. Platte nach einem oder mehreren der vorhergehenden Ansprüche, **dadurch gekennzeichnet, dass** die Vliesstoffschicht ein Gesamtgewicht aufweist, welches ein Flächengewicht von 10 bis 50 Gramm pro Quadratmeter, besonders einige Dutzend bis ungefähr 200 Gramm pro Quadratmeter, vorzugsweise 50 bis 150 Gramm pro Quadratmeter ist.

9. Platte nach einem oder mehreren der vorhergehenden Ansprüche, **dadurch gekennzeichnet, dass** die thermoplastischen Materialien, die für die Vliesstoffschicht benutzt sind, aus Fasern eines Polyesters gebildet sind, wie etwa zum Beispiel Polyethylenglykoletherterephthalat.

10. Platte nach einem oder mehreren der vorhergehenden Ansprüche, **dadurch gekennzeichnet, dass** die Vliesstoffschicht Bindemittel mit niedrigem Molekulargewicht in Faserverflechtung umfasst.

11. Platte nach einem oder mehreren der vorhergehenden Ansprüche, **dadurch gekennzeichnet, dass** die Vliesstoffschicht einer chemischen Oberflächenbehandlung unterzogen ist.

12. Platte nach einem oder mehreren der vorhergehenden Ansprüche, **dadurch gekennzeichnet, dass** die Vliesstoffschicht dem Sprühen mit einem Polymer mit niedrigem Molekulargewicht, das in einem geeigneten Lösemittel gelöst ist, auf die Oberfläche, die als die freie Seitenfläche der Platte ausgelegt ist, unterzogen ist.

13. Platte nach Anspruch 12, **dadurch gekennzeichnet, dass** ein Polymer mit niedrigem Molekulargewicht, das für diesen Zweck besonders geeignet ist, beispielsweise das sogenannte Latex ist.

## Revendications

1. Panneau latté qui est un panneau constitué d'un ensemble de bandes de bois adjacentes ou analogue, ledit panneau latté est constitué d'au moins une couche de base réalisée en bandes de bois adjacentes qui sont collées ensemble l'une près de l'autre qui est le long de parois perpendiculaires ou transversales au plan le long duquel au moins une face dudit panneau s'étend, au moins une des faces de la couche de base et/ou de préférence les deux faces de la couche de base étant couvertes d'une finition et/ou couche de résine de protection constituée d'une colle, particulièrement de résine mélamine ou phénolique, ou analogue, **caractérisé en ce que** la finition ou couche de protection de la couche de base unique ou multicouche comprend un renforcement de la couche de résine mélamine avec une couche de fibres croisées.

2. Panneau selon la revendication 1, **caractérisé en ce que** le renforcement de la finition et couche de protection est constitué d'une étoffe non tissée imprégnée de ladite résine mélamine.

3. Panneau selon la revendication 1, **caractérisé en ce que** l'étoffe non tissée est constituée de fibres croisées ayant des orientations et/ou chemins aléatoires.

4. Panneau selon l'une ou plusieurs des revendications précédentes, **caractérisé en ce qu'**au moins une couche de base constituée d'au moins une ou de plusieurs couches, constituées chacune à son tour de bandes de bois adjacentes collées ensemble l'une près de l'autre;
au moins une couche de finition constituée d'un entrelacement de fibres, particulièrement d'une étoffe non tissée imprégnée de résine mélamine ou phénolique et ancrée à la couche de base par ladite résine.

5. Panneau selon une ou plusieurs des revendications précédentes, **caractérisé en ce que** l'étoffe non tissée est constituée d'un matelas formé par au moins une ou plusieurs couches de fibres croisées, particulièrement d'étoffe non tissée constituée de fibres en matériau thermoplastique.

6. Panneau selon l'une ou plusieurs des revendications précédentes, **caractérisé en ce que** la couche de fibres, particulièrement réalisée en étoffe non tissée, possède diverses couches de fibres, en particulier l'étoffe non tissée, reliées les unes aux autres par thermosoudage et/ou entrelacement mécanique, aiguilletage mécanique ou à eau.

7. Panneau selon l'une ou plusieurs des revendications précédentes, **caractérisé en ce que** la couche d'étoffe non tissée possède un poids total qui est un poids de base qui est assez bas.

8. Panneau selon l'une ou plusieurs des revendications précédentes, **caractérisé en ce que** la couche d'étoffe non tissée possède un poids total, qui est un poids de base de 10 à 500 grammes par mètre carré, en particulier de quelques douzaines à environ 200 grammes par mètre carré, de préférence de 50 à 150 grammes par mètre carré.

9. Panneau selon l'une ou plusieurs des revendications précédentes, **caractérisé en ce que** les matériaux thermoplastiques utilisés pour la couche d'étoffe non tissée sont constitués de fibres d'un polyester, comme par exemple de polyéthylène glycol éther téréphtalate.

10. Panneau selon l'une ou plusieurs des revendications précédentes, **caractérisé en ce que** la couche d'étoffe non tissée comprend des liants d'un poids moléculaire bas dans l'entrelacement des fibres.

11. Panneau selon l'une ou plusieurs des revendications précédentes, **caractérisé en ce que** la couche d'étoffe non tissée est soumise à un traitement de surface chimique.

12. Panneau selon la revendication 11, **caractérisé en ce que** la couche d'étoffe non tissée est soumise à la projection d'un polymère d'un poids moléculaire bas dissous dans un dissolvant approprié sur la surface destinée à être la face libre du panneau.

13. Panneau selon la revendication 12, **caractérisé en ce qu'**un polymère d'un poids moléculaire bas, qui convient particulièrement à cette fin, est par exemple le soi-disant latex.
